# EUROPEAN PATENT APPLICATION

(11) **EP 1 683 724 A1**
(43) Date of publication of application: **26.07.2006**
(21) Application number: 06250346.1
(22) Date of filing: 23.01.2006
(51) Int. Cl.: B65D 1/12, B65D 43/00

(54) **An injection-molding process using blow-mold resin and moulded plastic container**

(30) Priority: 24.01.2005 US 646457 P; 19.01.2006 US 335880 P
(71) Applicant: Rieke Corporation, Auburn, Indiana 46706 (US)
(72) Inventor: Easterday, Dyke T., Auburn, Indiana 46706 (US); Kemerer, Brian L., Hicksville, Ohio 43526 (US)
(74) Representative: Williams, Michael Ian

(57) **Abstract**

The fabrication of an injection-molded plastic part using a blow-mold resin includes a first step of modifying an injection-molding machine (26) by enlarging resin passages in order for that machine to accept a more viscous resin. The next step in the fabrication process is to provide a mass of blow-molded resin heated to a viscosity suitable for the modified injection-molding machine. A third step is to introduce the mass of blow-molded resin into the modified injection-molding machine. The fourth step is operating the modified injection-molding machine in a manner consistent with the normal operation for injection-molding of the desired plastic part. A part of the present invention is the specific method of modifying component parts (28; 36; 38) of the injection-molding machine so that those component parts are compatible with a more viscous plastic resin.

## Description

The present application claims the benefit of United States Provisional Patent Application Serial No. 60/646,457, filed January 24, 2005 entitled "Injection Molding Process and Apparatus Using Blow-Mold Resin" which is hereby incorporated by reference in its entirety.

The present invention relates generally to an injection-molding process and the associated mold apparatus, using a blow-mold resin. More specifically, the present invention relates to the modifications required to an injection-molding machine in order to be able to use a blow-mold resin without adverse consequences to the finished, injection-molded parts, when used in their intended fashion.

In terms of large plastic drums and the cooperating plastic drum closure, such as a circular drum lid, there is a desire to be able to recycle the plastic resin for cost reasons as well as for environmental reasons, particularly when reconditioning is not an option. While drums and similar containers can be blow-molded, the corresponding lids that close those containers are typically fabricated by injection-molding, using a suitable injection grade resin.

Due to processing temperature differences, blow-mold resins and injection grade resins are not blended together for subsequent part molding as part of any remanufacturing or reconditioning process. This in turn requires that the injection-molded drum lid material be separated from the blow-mold container material at the time of any plastic resin regrind or recycling.

While the use of regrind resin is one way to lower cost, material availability remains a concern. Further, it is preferable to use a lower cost blow-mold resin as compared to an injection grade resin, so long as the finished part would permit the use of a blow-mold resin. Further, when the lid is made from an injection grade resin, one potential source for recyclable blow-mold material is lost. It would therefore be an improvement for a variety of reasons if a blow-mold resin could be used as part of an injection-molding process, such as for the aforementioned drum lid. By using a blow-mold resin for the drum lid, the entire container, including the drum and the drum lid, can be recycled as part of a regrind process and, by using one hundred percent (100%) blow-mold material, the overall cost involved in the process is reduced. A blow-molding drum manufacturer using regrind resin has less invested to start and can recoup some of that investment by having lids fabricated out of a blow-mold resin.

Arguably the two most significant problems or concerns in trying to use a blow-mold resin as part of an injection-molding process include the different melt temperatures relating then to the viscosity differences that result and the molding equipment configurations that are initially designed in injection-molding equipment for an injection grade resin and are not compatible or suitable for a blow-mold resin.

Blow-mold resins used to make containers, drums, and pails generally have a melt index that is less than the corresponding melt index for injection-mold grades. This difference in melt index causes the blow-molded material to require a higher injection pressure than would otherwise be needed for an injection grade resin. Traditionally, blow-mold resin is thought to be too stiff or dense to be able to push that material through the various passageways, tips, and nozzles of an injection-molding machine and the corresponding mold, such as the mold nozzle portion. When blow-mold resin, considering its handling viscosity, is attempted to be pushed through the passageways, tips, and nozzles during an injection-molding process, there are shear stresses induced and these cause heat and stress degradation of the resin. A result of this heat and stress degradation is that the finished parts will display evidence of cracking when subsequently tested to determine their suitability for their end use. If a blow-mold resin is going to be "successfully" injection-molded, design changes to the injection-molding equipment are needed.

An embodiment of the present invention makes the necessary design changes in the injection-molding equipment and the selected mold so that a blow-mold resin can be used without having adverse consequences on the suitability of the fabricated parts. This in turn enables the injection-molding of a drum lid using a blow-mold resin. The modification to the injection-molding equipment and the resultant parts that can be processed using that equipment are both seen as a novel and unobvious advance in the art.

The fabrication of an injection-molded plastic part using a blow-mold resin according to one embodiment of the present invention requires the first step of modifying at least one portion of an injection-molding machine in order for that machine to accept a more viscous resin. The next step in the fabrication process is to provide a mass of blow-molded resin, as required for the desired injection-molded part, with this blow-mold resin heated to a viscosity suitable for the modified injection-molding machine. A third step is to introduce the mass of blow-molded resin at the desired viscosity into the modified injection-molding machine. The fourth step is operating the modified injection-molding machine in a manner consistent with the normal operation for injection-molding of the desired plastic part as would be done if using an injection grade resin. Further included as part of an embodiment of the present invention is the specific method of modifying component parts of the injection-molding machine so that those component parts are compatible with a more viscous plastic resin. A still further aspect of the present invention is the plastic container to be produced from the injection-molding process wherein the container body is blow-molded while the closing lid for the container is injection-molded using a blow-mold resin. A still further part of an embodiment of the present invention is a machining modification to the mold nozzle.

One object of the present invention is to provide an improved fabrication process for an injection-molded plastic part using a blow-mold resin.

Preferred features of the present invention will now be described by way of example with reference to the accompanying drawings, in which:
FIG. 1 is a perspective view of a plastic container according to a typical embodiment of the present invention having a blow-molded container body and an injection-molded closing lid.
FIG. 2 is a rear elevational view of a toggle clamp injection-molding machine illustrating modifications made according to an embodiment of the present invention.
FIG. 3 is a front elevational view of an injection unit comprising a portion of the FIG. 2 injection-molding machine illustrating the modifications made according to an embodiment of the present invention.
FIG. 4 is a diagrammatic, front elevational view, in full section, of a press nozzle showing its before and after configuration.
FIG. 5 is a diagrammatic, front elevational view, in full section, of a mold nozzle showing its before and after configuration.

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

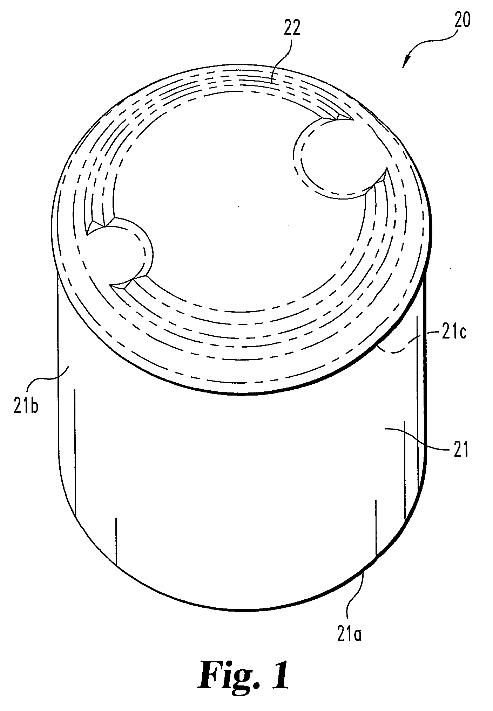

Referring to FIG. 1, there is illustrated a container 20 that is constructed and arranged for the packaging of a flowable product. Container 20 includes a blow-molded body 21 and an injection-molded closure in the form of lid 22. Body 21 has a closed lower end 2 1 a and a generally cylindrical surrounding wall 21b defining an open end 21c. While open end 21c is generally sized in a manner corresponding to the circumferential size of surrounding wall 21b, the actual dispensing opening for container 20 can be significantly smaller than opening 21c. As such, this smaller dispensing opening would be configured within lid 22. For the purposes of explaining the present invention, lid 22 is constructed and arranged to securely close and seal off open end 21c in order to prevent any leakage of the flowable product contained within container 20.

Both body 21 and lid 22 are fabricated using a blow-mold resin. This enables the entire container 20 to be recycled together and as desired subjected to a resin regrind (together), the regrind resin being used by a blow-molding drum manufacturer for the remanufacture or reconditioning in terms of the fabrication of a new drum. While an alternative to the present invention is simply to reprocess container 20 into a reconditioned drum without a regrind of the resin, the present invention is directed to the creation of lid 22 and the ability to injection-mold that lid using a blow-mold resin without introducing any reliability or performance problems into the resultant injection-molded lid.

Traditionally, a blow-mold resin, immediately prior to the mold halves enclosing the resin mass, has a sticky and dense consistency and can best be described as stiff. In comparison to an injection grade resin at the time of or immediately before being actually molded, the blow-mold resin has a higher viscosity with less fluidity as compared to the injection grade resin. With regard to the blow-molding process, after the mold halves are positioned around the resin mass, air is introduced into the center of that resin mass so as to push the resin outwardly against the confines of the mold as a further step in the blow-molding process. In contrast, when a resin is being injection-molded, it has a lower viscosity and a more liquid consistency. As would be understood, an injection grade resin must have sufficient fluidity, due in part to heating and its molecular composition, to be able to readily flow into all voids and corners of the mold cavity defined by the corresponding injection mold.

Blow-mold resins used to make containers, drums, and pails generally have a melt index that is less than the corresponding melt index for injection-mold grades. This difference in melt index causes the blow-molded material to require a higher injection pressure than would otherwise be needed for an injection grade resin. Traditionally, blow-mold resin is thought to be too stiff or dense to be able to push that material through the various passageways, tips, and nozzles of an injection-molding machine and the corresponding mold, such as the mold nozzle portion. When blow-mold resin, considering its handling viscosity, is attempted to be pushed through the passageways, tips, and nozzles during an injection-molding process, there are shear stresses induced and these cause heat and stress degradation of the resin. A result of this heat and stress degradation is that the finished parts will display evidence of cracking when subsequently tested to determine their suitability for their end use. If a blow-mold resin is going to be "successfully" injection-molded, design changes to the injection-molding equipment are needed.

As explained in the Background, a blow-molded resin lid offers a broader range of use for the eventual recycling of its base resin. Further, for the blow-molding drum manufacturer, being able to use regrind resin is a way to lower cost and therefore having a blow-mold resin lid would be preferable, so long as that blow-mold resin lid did not exhibit performance or reliability problems.

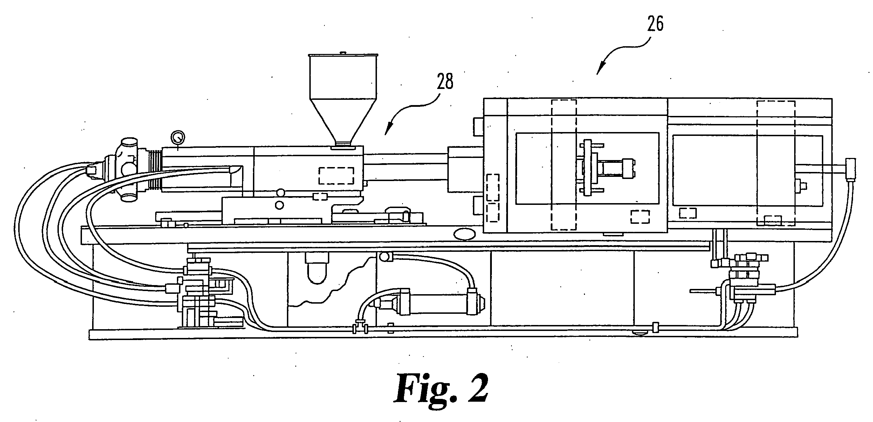

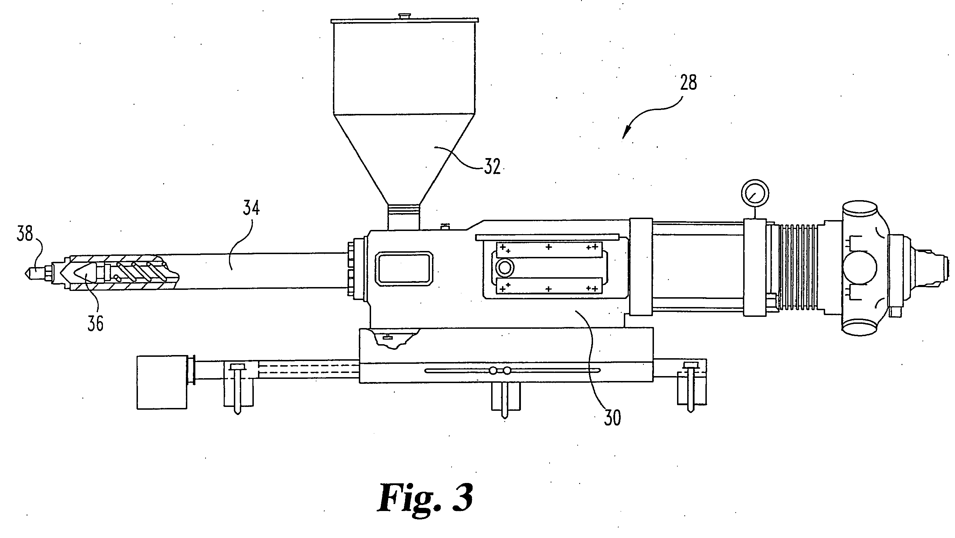

In order to modify the conventional injection-molding machine 26 (see FIG. 2) to enable the injection-molding of a blow-mold resin, design changes were made to the injection-molding machine 26, all according to the present invention. With reference to FIG. 2, the illustration of machine 26 is intended to represent a somewhat generic toggle clamp injection molding machine. One portion of machine 26 is the injection unit 28 (see FIG. 3). The modifications according to the present invention include two modifications to injection unit 28 and one modification to the mold nozzle 54 (see FIG. 5).

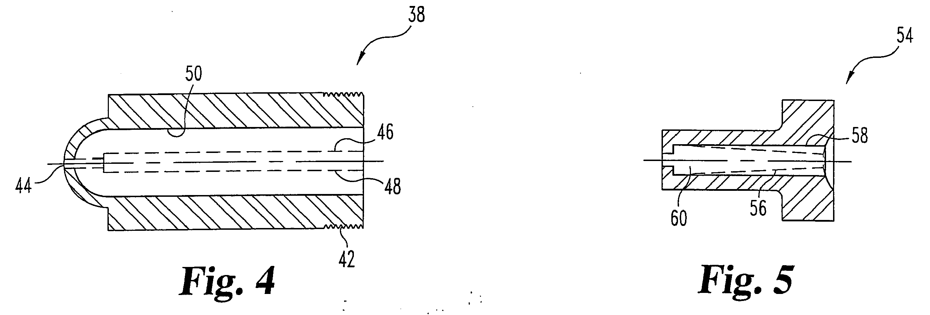

With continued reference to FIG. 3, injection unit 28 includes, among other required and recognizable component parts, an injection housing 30, hopper 32, barrel 34, non-return valve 36, and press nozzle 38 (see FIG. 4). One of the modifications to injection unit 28, and thus to machine 26, according to the present invention, is to replace the original non-return valve with a high-flow style valve depicted as valve 36. It should be noted that while the high-flow style valve is an available component part, heretofore it has not been used for injection-molding equipment because of its high-flow nature. The identified modification, according to the present invention, is simply to switch the injection grade resin style valve with the high-flow style valve, valve 36. By switching out the style of valve typically used for an injection grade resin, the blow-mold resin that is to be used for lid 22 is able to flow through barrel 34 more quickly. This more rapid movement and less flow restriction reduces resin degradation due to injection shear heat and molded-in stresses. By eliminating these stresses, the resin is able to "knit" at the cellular level so that the parts do not crack during testing and during subsequent use when used in the intended manner.

Another modification to injection unit 28 pertains to the design of press nozzle 38 (see FIG. 4). According to the present invention, nozzle 38 is the result of machining the conventional nozzle that would be present for an injection grade resin. The exterior size and shape of nozzle 38 is the same as the original configuration for the injection grade resin nozzle, including the screw thread end 42 and tip 44. The modification occurs relative to the interior flow channel 46. The broken line 48 represents the original flow channel through nozzle 38. The larger inside clearance for this flow channel is now defined by surface 50 and is the result of machining out the interior of nozzle 38 so as to enlarge it to what is considered to be the largest practical diameter and to also increase the depth of this enlarged diameter to the greatest practical depth. In terms of practicality, the overall strength of the part has to be considered in view of the pressures and the intended life expectancy. These design modifications are provided in order to reduce injection shear heat and molded-in stresses. This action also enables the resin to "knit" at the cellular level so that the parts do not crack during testing and subsequent use, when used in the intended manner.

With reference to FIG. 5, a mold nozzle 54 is illustrated and this is a component that is considered part of the mold rather than part of the injection unit 28. In the case of the injection molding of lid 22, a hot, direct drop process is used and nozzle 54 feeds directly into the mold cavity. The beginning form of mold nozzle 54 starts out as the original mold nozzle to be specified for injection-molding using an injection grade resin. In this respect, the starting nozzle form has the same exterior size and shape as the modified nozzle 54. The difference is found on the interior. Broken line 56 represents the smaller, more narrow starting flow channel of the original mold nozzle. The solid line 58 represents the enlarged flow channel 60, a result of machining away some of the interior material, according to the present invention. By enlarging the flow channel to the largest practical size, the new design contributes to reducing the injection shear heat and the molded-in stress. In turn, these actions, according to the present invention, enable the resin to "knit" at the cellular level so that the parts do not crack during testing and subsequent use, when used in the intended manner.

In terms of the processing method, beginning with the blow-mold resin, this material is introduced into the injection-molding machine as that machine has been modified according to the present invention. Next, the material temperatures are set to a slightly higher point than with standard blow-molded material that would be used in a blow-molding machine. This allows the blow-mold grade resin to melt to a proper viscosity for the injection-mold processing. The remainder of the injection-molding process is similar to that using a standard injection-molding resin. The injection-molding equipment has been modified and redesigned according to the present invention, but the injection-molding process, with the exception of using a blow-mold resin, is retained in substantially the same order and content. The mold nozzle is also modified according to the present invention.

One result of the present invention is the construction of an injection-molding machine that can properly accept and process a blow-mold resin. Another result of the present invention is a processing method including the requisite molding steps to fabricate lid 22 or other similar plastic part that should be injection-molded, but would preferably be molded with a blow-mold resin. Another result of the present invention is the fabrication of drum lid 22 by using an injection-mold process involving the use of a blow-mold resin.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A plastic container for the packaging of a flowable product, said container comprising:
a blow-molded container body defining a product-dispensing opening; and
an injection-molded closing lid constructed and arranged to close said product-dispensing opening, said closing lid being fabricated using a blow-mold resin.

2. The fabrication of an injection-molded plastic part using a blow-mold resin by a process comprising the following steps:
(a) modifying at least one portion of an injection-molding machine in order for that machine to accept a blow-mold resin;
(b) providing a mass of blow-mold resin heated to a viscosity suitable for said modified injection-molding machine;
(c) introducing said mass of blow-mold resin at the desired viscosity into said modified injection-molding machine; and
(d) operating said modified injection-molding machine in a manner consistent with the normal operation for injection-molding of a plastic part using an injection grade resin.

3. A method of modifying an injection-molding machine to be capable of successfully injection-molding a plastic part using a blow-mold resin, the injection-molding machine prior to modification including a non-return valve and a press nozzle, said method comprising the following steps:
(a) replacing the non-return valve with a high-flow style valve in order for the blow-mold resin to flow more rapidly so as to reduce injection shear heat and molded-in stresses; and
(b) machining the interior of the press nozzle to create a larger diameter flow channel as a way to reduce injection shear heat and molded-in stresses.
